# EUROPEAN PATENT APPLICATION

(11) **EP 1 744 267 A2**
(43) Date of publication of application: **17.01.2007**
(21) Application number: 06010086.4
(22) Date of filing: 16.05.2006
(51) Int. Cl.: G06K 19/07, G06K 7/00

(54) **Reader, tags, radio frequency identification (RFID) system, and method thereof**

(30) Priority: 23.06.2005 KR 20050054483
(71) Applicant: Samsung Electronics Co., Ltd., Suwon-si, Gyeonggi-Do (KR)
(72) Inventor: Moutchkaev, Artem, Yongin-si, Gyeonggi-do (KR); Kang, Woo-shik, Yeongtong-gu, Suwon-si, Gyeonggi-do (KR); Park, Kyung-ho, Yeongtong-gu, Suwon-si, Gyeonggi-do (KR)
(74) Representative: Grünecker, Kinkeldey, Stockmair & Schwanhäusser Anwaltssozietät

(57) **Abstract**

A reader, tags, an RFID system, and a method of simultaneously identifying a plurality of tags having colliding reply signals and reducing the reading time. In the RFID system including a reader and plural tags assigned unique IDs, the reader stores a comparison code which identifies ID codes generated based on the unique IDs of the tags, and issues a query signal to the tags to inquire into the presence of the tags. In response to the received query signal, the tags generate the ID codes based on their unique IDs and sends the ID codes to the reader. The reader stores the received ID codes and identifies the responding tags by comparing the stored comparison code with the ID codes. When the ID codes are orthogonal, colliding reply signals can be resolved through a correlation technique.

## Description

### BACKGROUND OF THE INVENTION

### Field of the Invention

Methods and apparatuses consistent with the present invention relate to readers, tags, radio frequency identification (RFID) systems. More particularly, the present invention relates to a reader, tags, a RFID system, and method of simultaneously identifying a plurality of colliding tags in reply signals, while reducing the reading time.

### Description of the Prior Art

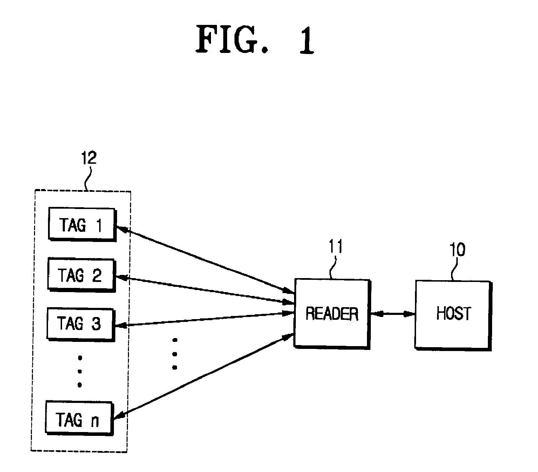

FIG. 1 illustrates the operation of a radio frequency identification (RFID) system which includes a reader and tags. RFID is a technology for identifying objects having tags by use of information contained in the tags without physical contact with the objects. Various applications of the RFID technology include product distribution management, traffic systems, security and safety systems, and so on.

The RFID system includes a reader 11 and more than two tags 12 which are assigned unique IDs, respectively. When the reader 11 transmits a command to request a reply from the tags 12 within its read range, the tags 12 receiving the command send replies. After identifying the responding tags 12, the reader 11 can retrieve or update information stored in a host 10 using the IDs of the responding tags 12.

In the case where a plurality of tags 12 are present in a read range of a reader 11, a plurality of tags 12 may respond at the same time. In this situation, the signals of the plurality of tags 12 intercept and collide with each other. To prevent such collisions, the RFID system adapts an anti-collision algorithm. According to Class1 Gen2 protocol, the reader specifies an integer Q and issues a command to request a reply from the tags 12. Tags receiving the command generate random numbers in a range from 0 to 2*^{Q}* -1 using the integer Q and assign time slots for responding based on the random numbers. The tags do not respond to the command until their respective time slots. However, such an anti-collision algorithm may still suffer from collisions. Upon the occurrence of a collision, the reader and the tags iteratively send and receive commands and replies until the reader discriminates the replies of the tags 12. As a result, the reading time is extended and power is wasted.

### SUMMARY OF THE INVENTION

The present invention has been provided to address the above-mentioned and other problems and disadvantages occurring in the conventional arrangement, and an aspect of the present invention provides a reader, tags, a radio frequency identification (RFID) system, and a method of simultaneously identifying a plurality of tags having colliding reply signals, thus reducing the reading time.

A reader in a radio frequency identification (RFID) system which includes the reader and more than two tags assigned unique IDs includes a storage which stores a comparison code for identifying each ID code generated based on each unique ID; a transmitter which generates and transmits a query signal to the tags to inquire into the presence of the tags; and a comparator which receives the ID codes from the tags, compares the ID codes with the comparison code stored in the storage, and identifies replying tags.

The tag in the RFID system includes a receiver which receives from the reader a query signal which is transmitted to inquire into the presence of the tag; a ID code generator which generates an ID code for identifying the tag based on the unique ID; and a transmitter which sends the ID code to the reader in response to the query signal.

The RFID system includes a reader; and more than two tags which are assigned unique IDs, respectively. Each of the tags includes a receiver which receives from the reader a query signal which is transmitted to inquire into the presence of the tag; a ID code generator which generates an ID code for identifying the tags based on the unique IDs; and a transmitter which sends the ID code to the reader in response to the query signal. The reader includes a storage which stores a comparison code for identifying the ID codes; a transmitter which generates and transmits a query signal to the tags; and a comparator which receives the ID codes from the tags, compares the ID codes with the comparison code stored in the storage, and identifies replying tags.

A method of identifying tags in a radio frequency identification (RFID) system which includes a reader and more than two tags assigned unique IDs, includes storing, by the reader, a comparison code for identifying ID codes which are generated based on the unique IDs by the tags; generating, by the reader, a query signal to inquire into the presence of the tags and transmitting the query signal to the tags; receiving, by the tags, the query signal from the reader, generating ID codes based on the IDs in response to the query signal, and transmitting the ID codes to the reader; and receiving, by the reader, the ID codes and identifying replying tags by comparing the stored comparison code with the ID codes.

The ID codes may mutually orthogonal, and the comparison code may be a set of orthogonal codes including the ID codes.

The comparison may identify the replying tags by correlating the ID codes with the comparison code.

The ID code generator may include a random number generator which generates random numbers based on the unique ID; and a linear feedback shift register (LFSR) which receives the generated random numbers as an initial state value and generates the ID code.

The transmitter may modulate the ID code according to a binary phase shift keying (BPSK) scheme and send the modulated ID code.

### BRIEF DESCRIPTION OF THE DRAWING FIGURES

These and/or other aspects and advantages of the invention will become apparent and more readily appreciated from the following description of exemplary embodiments, taken in conjunction with the accompanying drawing figures, of which:

FIG. 1 is a diagram illustrating an operation of a radio frequency identification (RFID) system including a reader and tags;

FIG. 2 is a block diagram of a reader and tags according to an embodiment of the present invention;

FIG. 3A is a block diagram of an ID code generator of the tag according to an embodiment of the present invention;

FIG. 3B is a diagram of a conventional LFSR;

FIG. 4 is a diagram illustrating correlations of an M sequence according to an embodiment of the present invention;

FIG. 5 is a diagram illustrating a reader for identifying tags according to an embodiment of the present invention; and

FIG. 6 is a flowchart outlining a tag identification method according to an embodiment of the present invention.

### DETAILED DESCRIPTION OF THE EMBODIMENTS

Certain exemplary embodiments of the present invention will now be described in greater detail with reference to the accompanying drawings.

In the following description, same drawing reference numerals are used for the same elements throughout the drawings. The details defined in the description, such as detailed construction and element descriptions, are provided to assist in a comprehensive understanding of the invention. Also, well-known functions or constructions are not described in detail since they would obscure the invention in unnecessary detail.

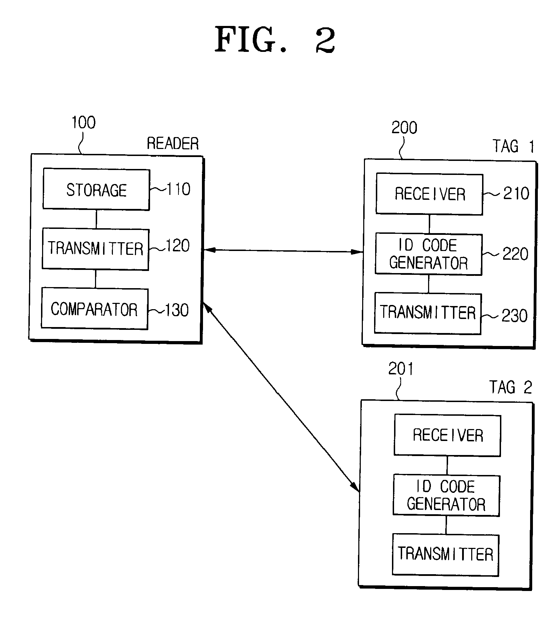

FIG. 2 is a block diagram of a reader 100 and tags 200 and 201 according to an embodiment of the present invention. The tags 200 and 201 each include a receiver 210, an identification (ID) code generator 220, and a transmitter 230.

The receiver 210 receives a query signal issued by the reader 100. The query signal is issued by the reader 100 to request the tags 200 and 201 to inform the reader 100 of the presence of the tags 200 and 201.

The ID code generator 220, upon receiving the query signal from the reader 100, generates an ID code to distinguish the tag 200 from the tag 201, based on a unique ID of the tag 200. The unique ID is assigned to the tags 200 and 201 to identify them in a radio frequency identification (RFID) system. In the case that a plurality of tags send replies to the reader 100 with their unique IDs at the same time, the signals of the tag IDs interrupt each other. As a result, it is hard for the reader 100 to identify the signals of the unique IDs. To prevent this, the ID code generator 220 generates a tag ID code so as to be orthogonal to other codes, thus to permit identification of the tags even when the tags simultaneously send replies to the reader 100.

Orthogonality represents that two codes have no correlation. Thus, two orthogonal codes denote that the two codes are independent from each other. In more detail, when two identical codes are integrated, the result is 1, and when two different codes are integrated, the result is zero. Examples of orthogonal coding include Walsh code, pseudo-noise (PN) code, and the like. In the Walsh code, different codes have no correlation, and the same code yields a value corresponding to the length of the code when a correlation is conducted The Walsh code has been utilized to identify mobile terminal devices in a code division multiple access (CDMA) system where the mobile terminal devices share and divide a frequency band of a signal base station. The PN code is one of the periodic codes. In the PN coding system, values are randomly distributed at respective points in one period In the CDMA system, the mobile terminal devices spread a transmission frequency band to a band over ten times as wide as the audio data frequency band and transmit a signal using the PN code. The receiving side demodulates the original signal using the same code as the PN code of the mobile terminal devices. The PN code can be a maximal length sequence (M sequence) or a Gold sequence.

The M sequence is a binary sequence generated using a linear feedback shift register (LFSR). If the LFSR is n-bits, the length of the M sequence is 2n-1. Further details on the M sequence are described in "Pseudo-Random Sequences and Arrays" by MacWilliams & Sloane, Proc IEEE, Vol. 64. No. 12, December 1976, pp 1715-1729.

The Gold sequence is generated by multiplying two M sequences which have three different cross-correlation values. Further details on the Gold sequence are described in "Crosscorrelation Properties of Pseudorandom and Related Sequences" by Sarwate & Pursley, Proc IEEE, Vol. 68, No. 5, May 1980, pp 593-619.

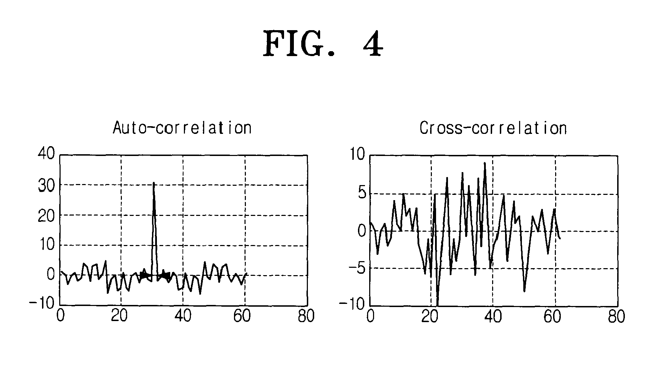

FIG. 4 depicts correlations of the M sequence according to an embodiment of the present invention. When the same (identical) codes are correlated, the top point in the middle is much greater than other values as shown in the auto-correlation graph. Thus, the M sequence can be identified even when other signals are strengthened due to the occurrence of noise. When a code is correlated with a different code, the results of the cross-correlation are clearly distinguished from the results in the auto-correlation graph. Accordingly, when the PN code including the M sequence is employed as the tag ID code, it is easy to discriminate between the auto-correlation and the cross-correlation. Therefore, the reader can easily identify the tag ID codes.

The transmitter 230 sends the ID code, generated by the ID code generator 220, to the reader 100 in response to the query signal of the reader 100. Preferably, the transmitter 230 modulates and sends the ID code according to a binary phase shift keying (BPSK) scheme. The BPSK scheme varies the carrier at 0 and 1 by a phase difference of 180 degrees. As the PN code has orthogonality for each phase shift, BPSK modulation is suitable for the PN code generation. The tags 200 and 201 can send their ID codes to the reader 100 according to a back scattering scheme which responds using the power transmitted from the reader 100.

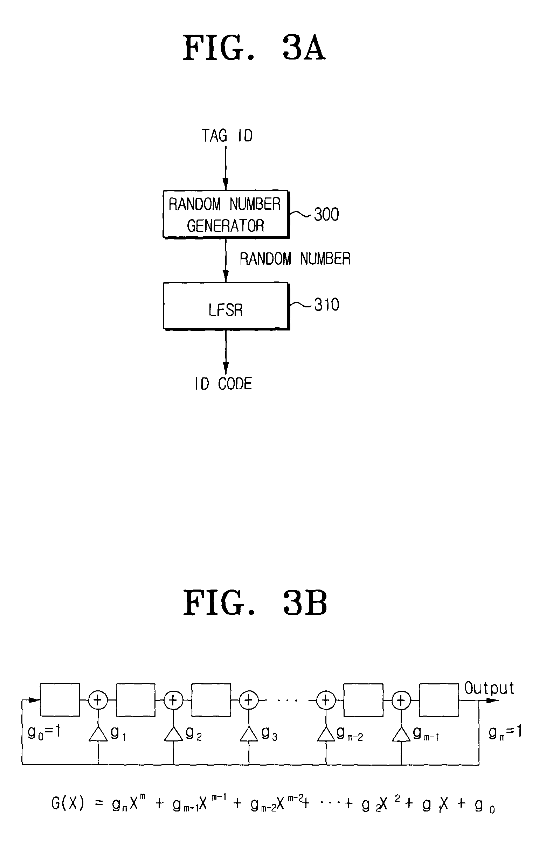

The following description will demonstrate how a tag generates an ID code, with reference to FIGS. 3A and 3B. FIG. 3A is a block diagram of the ID code generator 220 of the tag 200 according to an embodiment of the present invention. The ID code generator 220 includes a random number generator 300 and a LFSR 310.

The random number generator 300 generates random numbers based on the ID of the tag 200. Since the unique ID of the tag 200 has a quite long bit-length, certain bits are extracted and used to generate the random numbers at the random number generator 300.

The LFSR 310 receives the random numbers from the random number generator 300 as an initial state value and then creates the ID code. Note that the length of the LFSR 310 can be as large as necessary. The ID code created using the LFSR 310 is a part of the PN code (hereafter, referred to as a PN code segment).

FIG. 3B depicts a construction of a conventional LFSR The LFSR is a circuit which generates a sequence of binary bits using linear feedback. Contents in shift registers are shifted by one position according to a clock period At the same time, the output value and the exclusive OR value are input to the shift registers. LFSRs are often applied to circuitry for the generation of pseudo random sequences or cryptography.

The reader 100 includes a storage 110, a transmitter 120, and a comparator 130.

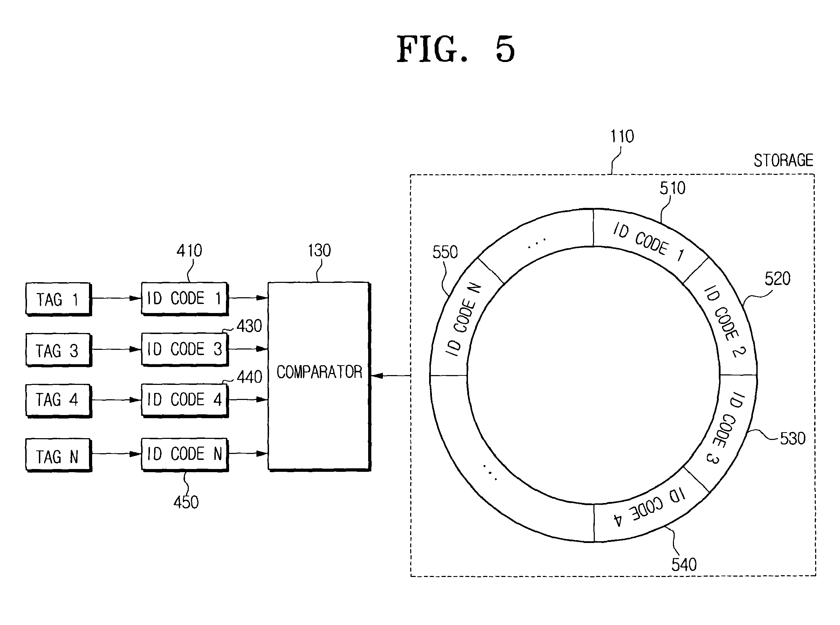

The storage 110 stores a comparison code to identify the ID codes generated by the tags based on their unique IDs. FIG. 5 depicts a reader for identifying tags according to an embodiment of the present invention. The storage 110 generates and stores a set of first through N-th ID codes 510 through 550 which are mutually orthogonal and includes the ID codes of the tags. By way of example, the storage 110 can generate and store a PN code including the PN code segments which are produced by the tags 200 and 201 using the random number generator 300 and the LFSR 310.

The transmitter 120 generates and issues a query signal to the tags 200 and 201 to request them to inform the reader 100 of their presence.

The comparator 130 receives the ID codes from the tags 200 and 201 in response to the query signal issued from the transmitter 120, and compares the received ID codes with the comparison code stored in the storage 110, to thus identify the responding tags 200 and 201.

Referring now to FIG. 5, a first tag, a third tag, a fourth tag and a N-th tag, upon receiving the query signal from the transmitter 120 of the reader 100, generate a first ID code 410, a third ID code 430, a fourth ID code 440, and a N-th ID code 450 at their respective ID code generators, and send replies to the reader 100. The replies may be received at the reader 100 at the same time or at intervals. The comparator 130 receives the first ID code 410, the third ID code 430, the fourth ID code 440, and the N-th ID code 450 within a certain time.

The comparator 130 correlates the first ID code 410, the third ID code 430, the fourth ID code 440, and the N-th ID code 450 with the comparison codes stored in the storage 110. Thus, the comparator 130 obtains how many tags send replies, and which tags send replies, using the ID codes. It is preferred that the comparator 130 be a correlator which discovers the correlation between the signals. For instance, when the third ID code 430 of the third tag is correlated with the comparison codes stored in the storage 110, the auto-correlation is yielded with the third ID code 530 of the comparison code which matches the third ID code 430. With respect to the first ID code 510, the second ID code 520, the fourth ID code 540, ..., and the N-th ID code 550 which are mutually orthogonal, the cross-correlation is yielded in relation with the comparison code.

In the embodiment of the present invention, in the RFID system where the PN code segments generated based on the unique IDs of the tags are used as the ID codes, the storage 110 of the reader 100 generates and stores the PN code as the comparison code. As shown in FIG. 4, the PN code has the property that the auto-correlation and the cross-correlation are clearly distinguishable. For instance, when the comparator 130 correlates the third ID code 430 corresponding to the third PN code segment of the third tag, with the first PN code segment of the PN code stored in the storage 110, the cross-correlation is produced as shown in FIG. 4. When the third ID code 430 being the third PN code segment is correlated with the second ID code 520 being the second PN code segment, the cross-correlation is yielded as well. When the comparator 130 correlates the third ID code 430 being the third PN code segment of the third tag, with the third ID code 530 being the third PN code segment of the PN code stored in the storage 110, the auto-correlation as shown in FIG. 4 is yielded and thus the third ID code can be identified.

To more promptly identify a plurality of ID codes received within a certain time duration, the comparator 130 may utilize a plurality of correlators. The first ID code 410, the fourth ID code 440, and the N-th ID code 450 are identified by the comparator in the same manner as described above.

If PN code segments generated at each tag are different, although the PN code segments are received at the same time, it is possible to identify the PN codes simultaneously by use of the property of the PN code that the auto-correlation and the cross-correlation can be clearly distinguished. When a conventional anti-collision algorithm is adapted alone, the simultaneously received reply signals interrupt each other. The reading time for the tag identification is lengthened because of the increased number of iterations to send and receive commands and replies between the reader and tags.

Whether the PN code segments generated at the tags overlap with each other is determined depending on the randomicity of the random numbers which are used as the initial state value of the LFSR 310. The random numbers are generated using certain bits of the tag unique IDs as a seed, and the number of random numbers M generated at the random number generator 300 is much greater than the number of tags N. Hence, the PN code segments generated at the tags are not likely to overlap each other. Additionally, when a general anti-collision algorithm is used together with the invention, the number of overlapping tags is not considerable. Thus, the number of iterations to send and receive commands and replies between the reader and tags for the tag identification is reduced even when the tags are overlapping. That is, the tag reading time can be reduced in comparison with the case when the conventional anti-collision algorithm alone is adopted.

Next, when the reader 100 intends to send a command to one of the first tag, the third tag, the fourth tag, and the N-th tag being identified, the reader 100 reversely calculates the random numbers from the ID codes corresponding to the PN code segments, and issues a command to request a reply only from a tag which has transmitted the random numbers. Alternatively, without the reverse calculation of the random numbers, the reader 100 may issue a command to request a reply only from a tag that has transmitted the corresponding PN code segment.

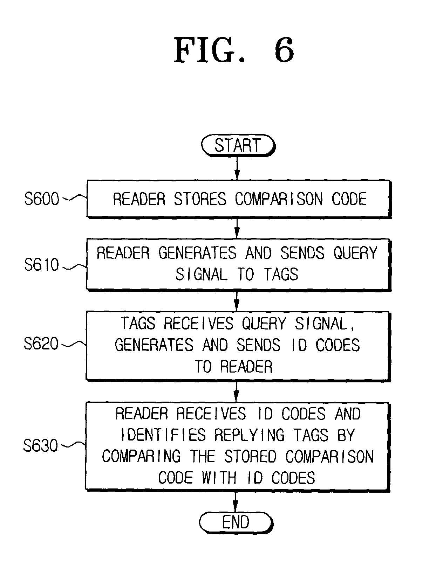

Description is now provided on the tag identification method for an RFID system which includes a reader and more than two tags having unique IDs. FIG. 6 is a flowchart outlining the tag identification method according to an embodiment of the present invention.

The reader stores a comparison code to identify the ID codes which are generated by the tags based on their unique IDs (S600). Referring back to FIG. 5, the storage 110 of the reader 100 generates and stores a set of orthogonal codes including the ID codes of the tags. In the embodiment of the present invention, the storage 110 generates and stores the PN code which includes the PN code segments which are generated by the random number generator 300 and the LFSR 310 at the tags.

The reader generates and sends a query signal to the tags to inquire into the presence of the tags (S610).

Upon receiving the query signal from the reader at operation S610, each tag generates an ID code based on its unique ID and sends the ID code to the reader (S620). The generation of the ID code by the tag at operation S620 is explained in detail with reference to FIG. 3. The tag generates random numbers based on its unique ID at the random number generator 300. Because of the long bit-length of the tag ID, certain bits are extracted to generate the random numbers at the random number generator 300.

The generated random numbers are input as the initial state value to the LFSR 310 to generate the ID code. The generated ID code is a part of the PN code, that is, the PN code segment.

Upon receiving the ID codes at operation S620, the reader 100 identifies the responding tags by comparing the received ID codes with the comparison code stored at operation S600 (S630). Specifically, referring back to FIG. 5, the first tag, the third tag, the fourth tag, and the N-th tag, receiving the query signal from the transmitter 120 of the reader 100 at operation S610, respectively generate the first ID code 410, the third ID code 430, the fourth ID code 440, and the N-th ID code 450 at the ID code generator 200, and send the ID codes to the reader 100 in response (S620). These replies may be received at the reader 100 simultaneously or at intervals. The comparator 130 receives the first ID code 410, the third ID code 430, the fourth ID code 440, and the N-th ID code 450 within a certain time duration.

Next, the comparator 130 correlates the first ID code 410, the third ID code 430, the fourth ID code 440, and the N-th ID code 450, with the comparison code stored in the storage 110, and thus acquires how many tags send replies, and which ones send replies with the ID codes tags. For this, a correlator can be employed to find the correlations between the ID codes and the comparison code. When the third ID code 430 generated by the third tag is correlated with the comparison code stored in the storage 110, the auto-correlation is yielded with respect to the third ID code 530 because the third ID code 430 matches the third ID code 530 of the comparison code. With respect to the first ID code 510, the second ID code 520, the fourth ID code 540, ..., and the N-th ID code 550 of the comparison code, which are orthogonal to the third ID code 430, the cross-correlation is yielded

In the embodiment of the present invention, the PN code segment generated based on the tag ID can be used as the ID code. At the operation S600, the PN code is generated and stored as the comparison code. As shown in FIG. 4, as the auto-correlation and the cross-correlation of the PN code are clearly distinguishable, the PN code can be used as the tag ID code in the RFID system.

The comparator 130 may employ a plurality of correlators to more promptly identify a plurality of ID codes received within a certain time duration.

**[Table 1]**

| | Conventional method | Present invention (using 10-bit LFSR) |
|---|---|---|
| Number of resolved tags | 1 | >10 |
| Read rate | Rrate | >2×Rrate |
| Read range | Rrange | >2×Rrange |
| Interference protection | - | > 6dB |

Table 1 shows the difference in effects between the conventional method and the present invention in case of tag collision in the RFID system. The comparison is made between a case when the PN code segment generated using the 10-bit LFSR is used as the ID code according to an embodiment of the present invention, and a case when only the conventional anti-collision algorithm is adapted. When tags collide with each other, the conventional method can identify only one tag, whereas the present invention can simultaneously identify more than 10 tags based on the correlations of the PN code. When the PN code having good orthogonal properties is used, its auto-correlation and cross-correlation are clearly distinguishable as shown in FIG. 4. Hence, it is easy to identify the tags even when more noise occurs due to longer distances. As a result, the read range is extended and the read rate is increased. Additionally, when the PN code segment is used as the ID code according to an embodiment of the present invention, the identification is feasible even at an interference level of more than 6 dB. Thus, the read rate can be further increased.

As set forth above, in the reader, the tags, the RFID system, and the RFID method according to an embodiment of the present invention, it is possible to identify a plurality of tags having colliding reply signals and the reading time can be reduced.

While the present invention has been particularly shown and described with reference to exemplary embodiments thereof, it will be understood by those skilled in the art that various changes in form and details may be made therein without departing from the spirit and scope of the invention as defined by the appended claims.

## Claims

1. A reader in a radio frequency identification (RFTD) system which includes the reader and more than two tags assigned unique IDs, the reader comprising:
a storage which stores a comparison code for identifying each ID code generated based on each unique ID;
a transmitter which generates and transmits a query signal to the tags to inquire into the presence of the tags; and
a comparator which receives the ID codes from the tags, compares the ID codes with the comparison code stored in the storage, and identifies replying tags.

2. The reader of claim 1, wherein the ID codes are mutually orthogonal, the comparison code is a set of orthogonal codes including the ID codes, and the comparator identifies the replying tags by correlating the ID codes with the comparison code.

3. A tag in a radio frequency identification (RFID) system which includes a reader and more than one tag assigned a unique ID, the tag comprising:
a receiver which receives from the reader a query signal which is transmitted to inquire into the presence of the tag;
a ID code generator which generates an ID code for identifying the tag, based on the unique ID; and
a transmitter which sends the ID code to the reader in response to the query signal.

4. The tag of claim 3, wherein the ID code generator comprises:
a random number generator which generates random numbers based on the unique ID; and
a linear feedback shift register (LFSR) which receives the generated random numbers as an initial state value and generates the ID code.

5. The tag of claim 3, wherein the transmitter modulates the ID code according to a binary phase shift keying (BPSK) scheme and sends the modulated ID code.

6. A radio frequency identification (RFID) system comprising:
a reader; and
more than two tags which are assigned unique IDs, respectively,
wherein each of the tags comprises:
a receiver which receives from the reader a query signal which is transmitted to inquire into the presence of the tag;
a ID code generator which generates an ID code for identifying the tags based on their unique IDs; and
a transmitter which sends the ID code to the reader in response to the query signal, and
the reader comprises:
a storage which stores a comparison code for identifying the ID codes;
a transmitter which generates and transmits a query signal to the tags; and
a comparator which receives the ID codes from the tags, compares the ID codes with the comparison code stored in the storage, and identifies replying tags.

7. The RFID system of claim 6, wherein the ID codes are mutually orthogonal, the comparison code is a set of orthogonal codes including the ID codes, the ID code generator comprises:
a random number generator which generates random numbers based on the unique IDs; and
a linear feedback shift register (LFSR) which receives the generated random numbers as an initial state value and generates the ID code, and
the comparator identifies the replying tags by correlating the ID codes with the comparison code and obtains the random numbers.

8. A method of identifying tags in a radio frequency identification (RFID) system which includes a reader and more than two tags assigned unique IDs, the method comprising:
storing, by the reader, a comparison code for identifying ID codes, which is generated based on the unique IDs of the tags;
generating, by the reader, a query signal to inquire into the presence of the tags and transmitting the query signal to the tags;
receiving, by the tags, the query signal from the reader, generating ID codes based on the IDs in response to the query signal, and transmitting the ID codes to the reader; and
receiving, by the reader, the ID codes and identifying replying tags by comparing the stored comparison code with the ID codes.

9. The method of claim 8, wherein the ID codes are mutually orthogonal, the comparison code is a set of orthogonal codes including the ID codes, and the comparison identifies the replying tags by correlating the ID codes with the comparison code.

10. The method of claim 8, wherein the ID codes are generated by generating random numbers based on the unique IDs and receiving the generated random numbers as an initial state value.
